Europäisches Patentamt

European Patent Office

Office européen des brevets

(19)

(11) Numéro de publication : **0 163 583 B1**

(12) **FASCICULE DE BREVET EUROPÉEN**

(45) Date de publication du fascicule du brevet :
30.09.87

(51) Int. Cl.⁴ : **B 62 M   9/12**

(21) Numéro de dépôt : **85420070.6**

(22) Date de dépôt : **19.04.85**

(54) **Dispositif de montage notamment de l'articulation du bras tendeur guide-chaîne des changements de vitesse pour bicyclettes et véhicules similaires.**

(30) Priorité : **24.04.84 FR 8406761**
**05.04.85 FR 8505412**

(43) Date de publication de la demande :
**04.12.85 Bulletin 85/49**

(45) Mention de la délivrance du brevet :
**30.09.87 Bulletin 87/40**

(84) Etats contractants désignés :
**AT BE CH DE GB IT LI LU NL SE**

(56) Documents cités :
**FR-A- 2 506 251**
**US-A- 4 259 873**

(73) Titulaire : **Etablissements LE SIMPLEX (société à responsabilité limitée)**
**3 et 5 rue de la Breuchillière Zône Industrielle Dijon St-Apollinaire**
**F-21019 Dijon Cedex (FR)**

(72) Inventeur : **Juy, Henri**
**43 Rue Chabot Charny**
**F-21000 Dijon (FR)**

(74) Mandataire : **Dupuis, François**
**Cabinet Charras 3 Place de l'Hôtel-de-Ville**
**F-42000 St.Etienne (FR)**

Description

Corollairement, entrent dans le cadre de l'invention, les changements de vitesse fabriqués et montés selon ce dispositif.

L'objet de l'invention se rattache au secteur technique des véhicules en général, des cycles et véhicules similaires et leurs équipements et accessoires.

Les changements de vitesse pour bicyclettes et véhicules similaires comportent généralement un bras tendeur guide-chaîne monté pivotant autour d'un axe dans un support à la partie inférieure du système de déplacement transversal du changement de vitesse. Le bras tendeur pivote avec un déplacement angulaire qui est limité dans les deux sens, d'une manière courante, au moyen d'une butée extérieure du bras arrêtée contre le support inférieur. Le bras tendeur guide-chaîne est le plus souvent, quoique non limitativement, constitué par deux flasques entre lesquels tournent librement au moins un et plus généralement deux galets sur lesquels la chaîne prend appui et est enroulée partiellement.

On connaît par exemple, le brevet français n° 2 506 251 qui correspond au préambule de la première revendication et qui fait état d'un changement de vitesse dont le bras tendeur guide-chaîne met en œuvre un axe d'articulation avec un moyen de blocage angulaire et un ressort de rappel en tension.

La butée angulaire de l'axe s'opère par une vis qui débouche partiellement dans l'alésage du support recevant ledit axe en étant apparente à la partie inférieure du support. Le ressort est lié dans une partie du support et dans une partie du bras tendeur engendrant un problème de dépendance rendant difficile le montage du support sur le bras tendeur et un problème d'étanchéité.

Selon l'invention, on a voulu remédier à ces inconvénients par une nouvelle conception du support inférieur et du montage dudit support par rapport à l'axe du bras tendeur, ainsi que du montage du ressort travaillant en torsion, par rapport audit support et audit axe. On apporte ainsi de notables avantages quant à la suppression de la tête ou extrémité d'axe apparente à l'extérieur du support inférieur, à la suppression de la butée extérieure apparente du bras tendeur guide-chaîne, à l'amélioration de l'étanchéité.

Pour atteindre le but recherché, l'invention telle que caractérisée dans les revendications est remarquable en ce que l'axe d'articulation du bras tendeur est fixé solidairement audit bras tendeur guide-chaîne ou à un flasque de ce bras, tandis que le support inférieur qui est agencé pour être fixé au système de déplacement transversal du changement de vitesse, présente un logement cylindrique pour recevoir ledit axe, ce logement étant ouvert du côté du bras tendeur et fermé, du côté extérieur un moyen élastique de rappel en tension du bras tendeur étant monté à l'intérieur du support et convenablement lié à l'axe d'une part et audit support d'autre part ; une tige ou moyen équivalent étant montée dans le support inférieur d'une manière perpendiculaire à l'axe du logement cylindrique, en intersection avec la partie périphérique dudit logement, ladite tige assurant la double fonction de retenue du support par rapport à un épaulement de l'axe d'articulation et de butée dans les deux sens de pivotement du bras tendeur par rapport à une portée convenablement agencée de l'axe d'articulation solidaire dudit bras.

Les avantages obtenus grâce à cette invention consistent essentiellement en ce que le montage particulier de la tige dans le support qui ne déborde pas dudit support, autorise une double fonction d'accouplement du support par rapport à l'axe d'une manière non séparable axialement et de butée angulaire dans les deux sens de l'axe.

D'autre part, le ressort de rappel est monté en totale indépendance du bras tendeur facilitant le montage sans se préoccuper du positionnement et de la mise sous tension dudit ressort, un tel montage permettant en outre d'interposer un joint d'étanchéité.

L'invention est exposée ci-après plus en détail à l'aide des dessins qui représentent seulement un mode d'exécution.

La figure 1 montre par une vue d'ensemble et à titre d'exemple de mise en œuvre, un changement de vitesse équipé du dispositif suivant l'invention, notamment avec un support inférieur fermé ne laissant pas apparaître l'extrémité d'axe.

La figure 2 montre par des vues en perspective une forme de réalisation du support inférieur et aussi dans les alignements axiaux de montage, l'axe d'articulation et la tige de retenue et de butée.

La figure 3 est une vue en coupe du support inférieur, montrant le dispositif.

Les figures 4 et 5 sont des vues en coupes semblables considérées suivant la ligne 4.4. de la figure 3, qui montrent les deux positions angulaires extrêmes de butée de l'axe solidaire du bras tendeur par rapport à la tige de butée.

La figure 6 est une vue en perspective de l'axe d'articulation exécuté selon une autre forme de réalisation.

La figure 7 est une vue en coupe longitudinale du support inférieur.

Les figures 8 et 9 sont des vues en coupe semblables considérées suivant la ligne 8.8 de la figure 7 qui montrent les deux positions angulaires extrêmes de butée de l'axe d'articulation par rapport à la tige de butée en combinaison avec le brin correspondant du ressort.

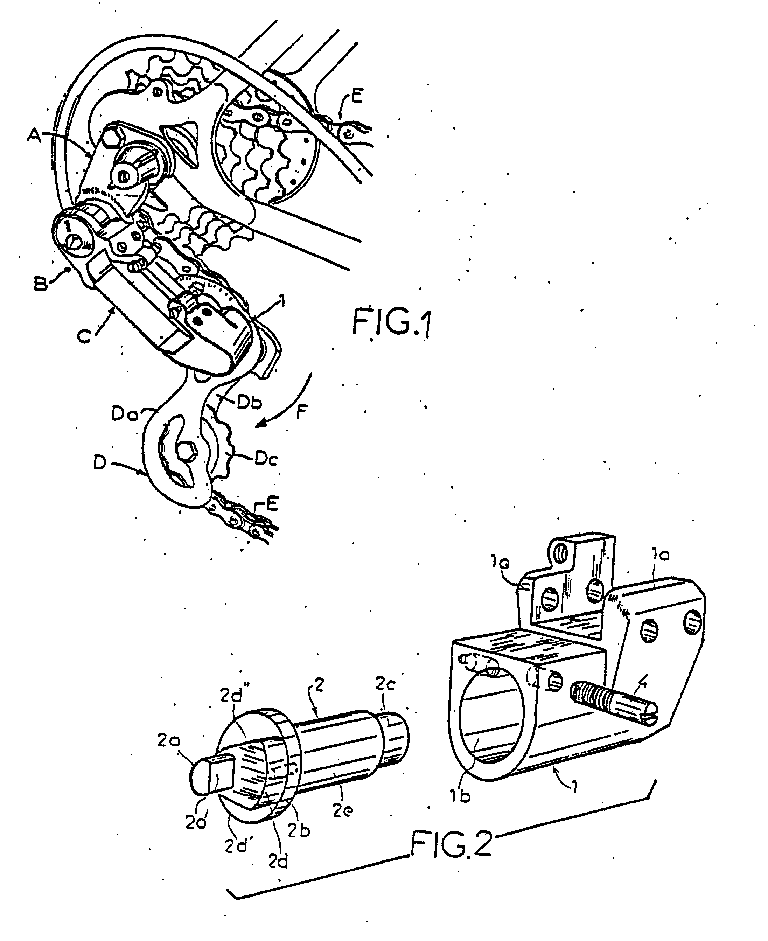

On a représenté notamment à la figure 1, un changement de vitesse pour bicyclettes ou véhicules similaires, qui est du type dont la patte de montage (A) est fixée sur l'axe de la roue arrière du cycle. Cette patte porte un support supérieur (B) et un système de déplacement transversal à parallélogramme articulé désigné dans l'ensemble par (C). Les branches du parallélogramme sont liées d'une manière articulée à un support inférieur (1) exécuté selon les caractéristiques du dispositif de montage de l'articulation suivant l'invention. Sur ce support est articulé un bras tendeur guide-chaîne (D) qui pivote avec un déplacement angulaire limité dans les deux sens afin d'assurer la tension du brin libre de la chaîne (E).

Le bras tendeur (D) peut être réalisé de diverses manières et, dans l'exemple non limitatif illustré, il est constitué par deux flasques (Da et Db) entre lesquels tournent librement un et plus généralement deux galets (Dc) comme représenté, la chaîne (E) prenant appui sur ces galets autour desquels elle est partiellement enroulée.

Il est précisé que le système de déplacement transversal peut être de tout type connu, autre que le parallélogramme articulé représenté et par exemple, un système à axe transversal coulissant. De même, le changement de vitesse peut être fixé à la bicyclette autrement qu'au moyen de la patte (A) de montage.

Selon l'invention, l'axe d'articulation (2) est fixé solidairement au bras tendeur (D) et plus précisément au flasque (Da) dans l'exemple illustré.

A cet effet, l'extrémité (2a) est une portée présentant au moins un méplat (2a'), qui est engagé dans un trou correspondant du flasque (Da). L'extrémité (2a) est ensuite sertie pour assurer la solidarisation de l'axe (2) et du bras tendeur (D).

Le support inférieur (1) qui peut être moulé ou injecté en métal, alliage ou matériau plastique, présente des pattes (1a) dans l'exemple illustré, pour être fixé d'une manière articulée aux biellettes du système à parallélogramme articulé (C).

Le corps du support (1) présente des logements (1b et 1c) cylindriques, pour être fermement maintenu et engagé à coulissement et rotation libre sur les portées (2b) et (2c) de l'axe (2). A cet effet, le logement (1b) est ouvert du côté du flasque (Da) du bras tendeur (D), et il est fermé du côté extérieur. On supprime ainsi, par rapport aux montages habituels du support inférieur, l'ouverture extérieure du logement du support et la tête ou moyen de fixation apparent, qui ne permettent pas l'étanchéité du montage et autorisent des infiltrations d'eau, de poussière ou autres éléments perturbant le fonctionnement et détériorant le changement de vitesse.

Afin d'éviter les infiltrations et d'assurer l'étanchéité du côté de l'ouverture du logement (1b), il est prévu le montage d'un joint à lèvre (3), du type connu en soi, à l'extrémité du logement (1b), la lèvre du joint (3) étant en friction contre le bras tendeur et plus précisément contre le flasque (Da) dans l'exemple illustré. La graisse de lubrification à l'intérieur du support est retenue.

Pour faciliter l'engagement du support (1) sur les portées (2b) et (2c) de l'axe (2), les angles desdites portées, du côté de l'engagement, sont abattus par un chanfrein circulaire comme illustré.

Pour simplifier la fabrication et améliorer l'effet esthétique en supprimant toute butée et protubérance extérieure sur le support et/ou le bras tendeur, et les risques inhérents à un tel montage de butée extérieure, une tige filetée (4), ou un moyen équivalent éventuellement, est monté dans le support (1) et par rapport à l'axe (2) de façon à remplir une double fonction. Pour cela, la tige (4) est engagée et vissée dans le support (1) d'une manière perpendiculaire à l'axe du logement (1b), en se trouvant en intersection tangente dans l'exemple illustré, ou approximativement, avec la partie périphérique dudit logement (1b) et près de l'extrémité ouverte de ce logement, entre ladite extrémité ouverte et la portée de grand diamètre (2b) de l'axe (2).

De ce fait, le support (1) est lié à l'axe (2) et au bras tendeur (D) d'une manière non séparable axialement, tout en autorisant un déplacement angulaire relatif. Pour séparer les organes, il faut démonter la tige (4).

D'autre part, on fait jouer à la tige (4) le rôle d'une butée intérieure dans les deux sens du déplacement angulaire du bras (D) et de·l'axe (2).

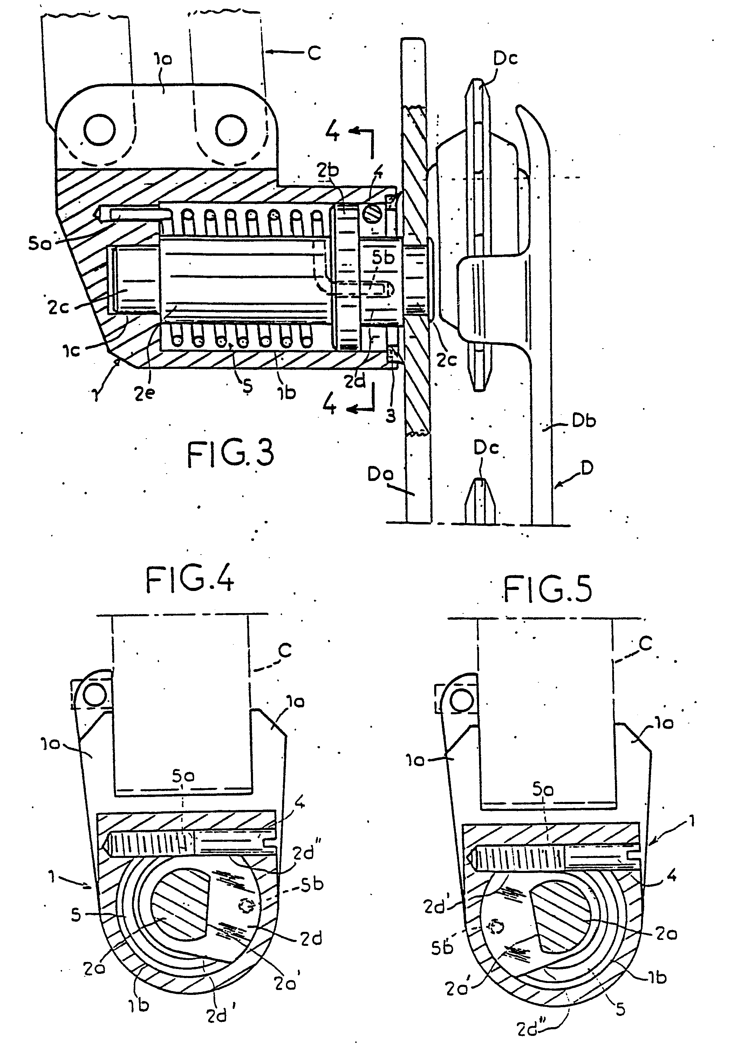

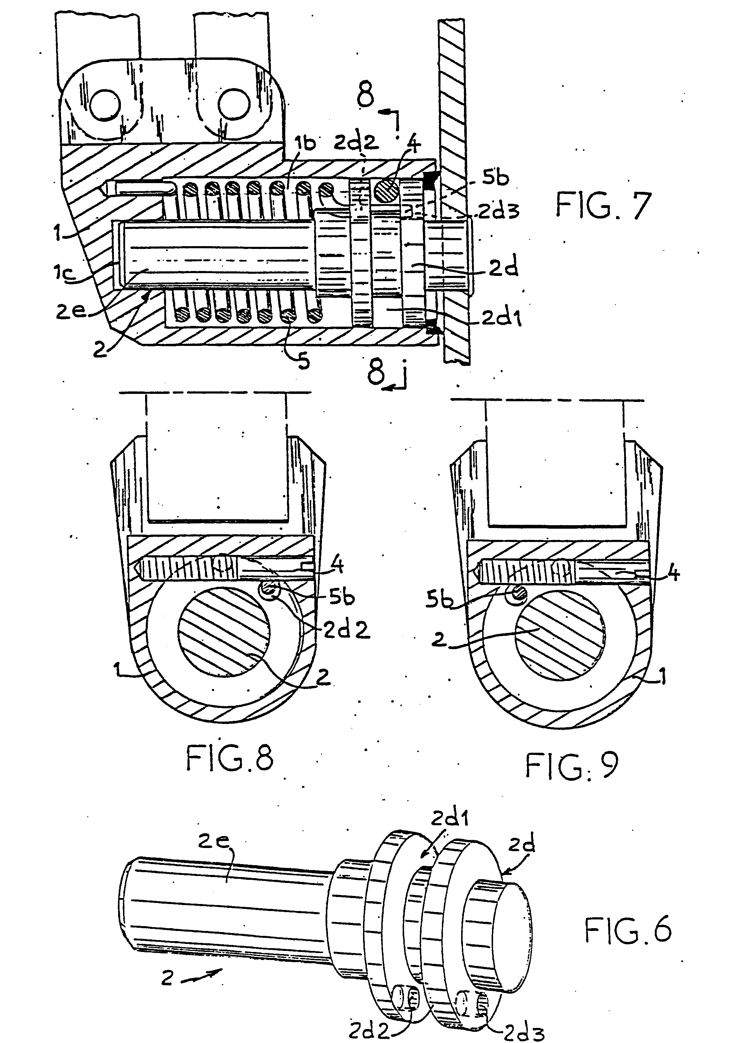

Pour cela, la portée (2d) de l'axe (2) qui se trouve dans·le plan et en regard de la tige (4) est largement entaillée et présente des méplats (2d'-2d") formés selon des angles judicieux compte-tenu de l'amplitude de déplacement angulaire que l'on autorise, dans les deux sens, au bras (D) et à l'axe (2). On a illustré aux figures 4 et 5, l'effet de butée double que remplit la tige (4) en conjugaison avec la portée (2d) et les méplats (2d'-2d") dans cette portée.

Dans une forme de réalisation illustrée figure 6 notamment, la portée (2d) de l'axe (2) présente une gorge circulaire (2d1). La tige (4) est sécante à la gorge (2d1). Le pivotement angulaire de l'axe d'articulation (2) du bras tendeur n'est donc pas entravé par la vis (4) qui, toutefois, continue à jouer le rôle d'une butée intérieure dans les deux sens du déplacement angulaire du bras assujetti audit axe (2).

Dans ce but, la portée (2d) de l'axe (2) est percée de part en part selon ses génératrices, en formant deux trous coaxiaux qui débouchent dans la gorge (2d1). Ces deux trous (2d2) et (2d3) permettent l'engagement et le positionnement d'une partie du moyen élastique qui agit dans un sens de pivotement du bras (D) afin de tendre la chaîne selon flèche (F) (figure 1), sous forme d'un ressort de torsion (5) monté dans le logement (1b), autour de la portée (2e) de l'axe (2). Pour lui donner la tension nécessaire à l'entraînement angulaire du bras (D), un brin coudé (5a) à une extrémité du ressort est engagé dans un trou percé au fond du logement (1b), l'autre brin coudé (5b) à l'autre extrémité du ressort est engagé dans les deux trous (2d2) et (2d3). Lors du montage, la tige (4) est mise en place après montage et tension du ressort (5) par ses brins coudés engagés dans les orifices correspondants du support et de l'axe. Il en résulte donc que le brin (5b) traverse la gorge (2d1) en étant susceptible par conséquent de venir coopérer en butée avec la tige (4). On a illustré aux figures 8 et 9, l'effet de butée double qui remplit la tige (4) en combinaison avec le brin (5b) du ressort (5).

La gorge (2d1) de la portée de l'axe peut facilement être obtenue par décolletage facilitant et multipliant ainsi la réalisation, tout en diminuant le coût de fabrication.

Dans la réalisation des figures 2 à 5, le ressort (5) est monté en tension en combinaison avec l'axe (2) et le support (1) comme indiqué ci-dessus, c'est-à-dire que le brin coudé (5a) est engagé dans le trou percé dans le fond du logement (1b), tandis que l'autre brin (5b) est engagé dans un trou percé dans les portées (2b) et (2d).

Afin d'améliorer l'étanchéité, il est prévu que le trou percé dans les portées (2b-2d) et le trou (2d3) pour le brin (5b), ne débouche pas sur la face de la portée (2d) qui est du côté de la tige (4).

## Revendications

1. Dispositif de montage notamment de l'articulation du bras tendeur guide-chaîne des changements de vitesse pour bicyclettes et véhicules similaires, dans lesquels le bras tendeur (D) pivote avec un déplacement angulaire limité dans les deux sens sous une poussée élastique dans un sens, dans un support (1) à la partie inférieure du système de déplacement transversal (C) du changement de vitesse, l'axe d'articulation (2) du bras tendeur (D) étant fixé solidairement audit bras tendeur guide-chaîne ou à un flasque (Da) de ce bras, tandis que le support inférieur (1) qui est agencé pour être fixé au système de déplacement transversal (C) du changement de vitesse, présente un logement cylindrique (1b-1c) pour recevoir ledit axe, ce logement étant ouvert du côté du bras tendeur et fermé, du côté extérieur un moyen élastique (5) de rappel en tension du bras tendeur étant monté à l'intérieur du support et convenablement lié à l'axe d'une part et audit support d'autre part, caractérisé en ce qu'une tige (4) ou moyen équivalent est montée dans le support inférieur (1) de manière perpendiculaire à l'axe du logement cylindrique (1b) et sécante sur la partie périphérique dudit logement, pour assurer la double fonction de retenue de l'axe (2) par rapport au support (1) et de butée extrême de la rotation du bras tendeur (D) solidaire de l'axe (2) par rapport au support (1) du fait d'un agencement convenable d'une portée (2d) de l'axe qui se trouve dans le plan et en regard de la tige (4).

2. Dispositif suivant la revendication 1, caractérisé en ce que l'extrémité de l'axe d'articulation qui est fixée au bras tendeur ou au flasque du bras tendeur, présente au moins un méplat et est engagée dans un trou correspondant du bras ou du flasque, pour être assemblée par tous moyens connus.

3. Dispositif suivant la revendication 1, caractérisé par le montage d'un moyen d'étanchéité tel que joint à lèvre (3) à l'extrémité ouverte du logement (1b) du support (1), la lèvre du joint étant en friction contre le bras tendeur.

4. Dispositif suivant la revendication 1, caractérisé par des chanfreins abattant les angles des portées (2b-2c) de l'axe (2) du côté de l'engagement du support (1) sur lesdites portées.

5. Dispositif suivant la revendication 1, caractérisé en ce que la tige (4) ou moyen équivalent, est montée en intersection tangente ou approximativement, par rapport à la partie périphérique du logement (1b) du support (1) et près de l'extrémité ouverte dudit logement, entre ladite extrémité ouverte et la portée de grand diamètre (2b) de l'axe (2).

6. Dispositif suivant la revendication 1, caractérisée en ce que la portée (2d) de l'axe (2) présente une gorge circulaire (2d1) dans laquelle est positionnée d'une manière sécante ladite tige, tandis que ladite portée (2d) est agencée pour qu'une partie du moyen (5) traverse la gorge (2d1) pour coopérer, en position de butée, avec la tige (4) qui fait office de butée extrême dans les deux sens du déplacement angulaire du bras et de l'axe (2).

7. Dispositif suivant la revendication 1, caractérisé en ce que la portée (2d) de l'axe (2) est largement entaillée et présente des méplats (2d'-2d") formés selon des angles convenables, compte-tenu de l'amplitude de déplacement angulaire qui doit être autorisée, dans les deux sens, au bras tendeur (D) et à l'axe (2).

8. Dispositif suivant la revendication 1, le moyen élastique qui agit dans un sens de pivotement du bras tendeur (D) étant un ressort de torsion (5) monté dans le logement (1b) du support autour d'une portée (2e) de l'axe, caractérisé en ce qu'un brin coudé (5a) à une extrémité du ressort, est engagé dans un trou percé au fond dudit logement (1b), l'autre brin coudé (5b) à l'autre extrémité du ressort étant engagé dans un trou percé dans les portées (2b-2d) de l'axe (2), une tension élastique étant donnée au ressort (5) lors du montage, avant mise en place de la tige (4).

9. Dispositif selon la revendication 1, le moyen élastique qui agit dans un sens de pivotement du bras tendeur (D) étant un ressort de torsion (5) monté dans le logement (1b) du support, autour d'une portée (2e) de l'axe, caractérisé en ce que la portée (2d) de l'axe (2) est percée de part en part, selon ses génératrices en formant deux trous coaxiaux (2d2) et (2d3) débouchant dans la gorge (2d1) pour l'engagement et le positionnement du brin (5b) du ressort, l'autre brin (5a) étant engagé dans un trou percé au fond du logement (1b) du support, une tension élastique étant donnée au ressort (5) lors du montage, avant remise en place de la tige (4).

10. Dispositif suivant l'une quelconque des revendications 8 ou 9, caractérisé en ce que le trou percé dans les portées (2b-2d) de l'axe et le trou (2d3) pour y engager le brin (5b) du ressort (5), ne débouche pas sur la face de la portée (2d) qui est du côté de la tige (4), de façon à assurer une meilleure étanchéité.

**Claims**

1. Mounting device more particularly for the linking of the chain-guide stretcher-arm of change speed gears for bicycles and the like, in which the stretcher-arm (D) is pivoted with angular shifting limited in both directions under the action of an elastic stress in one direction, within a support (1) at the lower part of the transverse shifting system (C) of the change gear device, the linking shaft (2) of the stretcher-arm. (D) being secured in an integral manner to the said chain-guide stretcher-arm or to a cheek (Da) of this arm, while the lower support (1) which is arranged for being secured to the transverse shifting system (C) of the change gear device is provided with a cylindrical housing (1b-1c) for receiving said shaft, this housing being open on the side of the stretcher-arm and closed on the external side, an elastic means (5) for the return in tensioning of the stretcher-arm being mounted in connection with the shaft on the one hand, and in connection with said support on the other hand, said mounting device being characterized in that a rod (4) or equivalent means is mounted within the lower support (1) in a perpendicular manner to the axis of the cylindrical housing (1b) and in a secant manner on the peripheral portion of said housing, in order to provide the double function of a retaining action for the shaft (2) relative to the support (1) and of an end stop for the rotation of the stretcher-arm (D) integral with the shaft (2) relative to the support (1), owing to a convenient arrangement of a boss (2d) of the shaft which is located in the plane of the rod (4) and opposite this rod.

2. Device as claimed in Claim 1, characterized in that the end of the linking shaft which is secured to the stretcher-arm or to the cheek of the stretcher-arm has at least one flattened portion and is engaged within a corresponding bore of the arm or of the cheek in order to be assembled by any well-known means.

3. Device as claimed in Claim 1, characterized in that there is provided the mounting of a sealing means such as a lipped seal (3) at the open end of the housing (1b) of the support (1), the lip of the seal being frictionally engaged against the stretcher-arm.

4. Device as claimed in Claim 1, characterized in that bevels are provided which cut the angles of the bosses (2b-2c) of the shaft (2) on the side of the engagement of the support (1) on said bosses.

5. Device as claimed in Claim 1, characterized in that the rod (4) or equivalent means is mounted intersectionally tangential or approximately to the peripheral portion of the housing (1b) of the support (1) and adjacent to the open end of said housing, between said open end and the boss of greater diameter (2b) of the shaft (2).

6. Device as claimed in Claim 1, characterized in that the boss (2d) of the shaft (2) is provided with a circular groove (2d1) in which said rod is positioned in a secant manner, while said boss (2d) is so designed that a portion of means (5) will pass through the groove (2d1) to cooperate, in the position of abutment, with the rod (4) playing the part of an end stop in the two angular shifting directions of the arm and of the shaft (2).

7. Device as claimed in Claim 1, characterized in that the boss (2d) of the shaft (2) is widely cut out and has flattened portions (2d'-2d") formed along suitable angles, taking into account the magnitude of the angular shifting which is to be permitted in both directions for the stretcher-arm (D) and the shaft (2).

8. Device as claimed in Claim 1, the elastic means operational in a swinging direction of the strecher-arm (D) being a torsion spring (5) mounted within the housing (1b) of the support round a boss (2e) of the shaft, characterized in that a bent stem (5a) at one end of the spring is engaged within a hole bored at the bottom of said housing (1b), the other bent stem (5b) at the other end of the spring being engaged within a hole bored in the bosses (2b-2d) of the shaft (2), an elastic tensioning being given to the spring (5) when assembling the device, prior to positioning the rod (4).

9. Device as claimed in Claim 1, the elastic means operational in a swinging direction of the strecher-arm (D) being a torsion spring (5) mounted within the housing (1b) of the support, round a boss (2e) of the shaft, characterized in that the boss (2d) of the shaft (2) is drilled therethrough along the generatrices thereof, forming thereby two coaxial bores (2d2) and (2d3) opening into the groove (2d1) for the engagement and the positioning of the stem (5b) of the spring, the other stem (5a) being engaged within a hole drilled at the bottom of the housing (1b) of the support, an elastic tensioning being given to the spring (5) when assembling the device, prior to positioning the rod (4).

10. Device as claimed in any one of Claims 8 ou 9, characterized in that the hole bored into the bosses (2b-2d) of the shaft and the hole (2d3) for the engagement of the stem (5b) of the spring (5) do not open on the face of the boss (2d) which is on the side of the stem (4), in order to provide a better sealing.

**Patentansprüche**

1. Montiervorrichtung, insbesondere für die Anlenkung des Kettenführungsspannarms der Wechselgetriebe für Fahrräder und ähnliche Fahrzeuge, in welchen der Spannarm (D) durch die Wirkung einer elastischen Stosskraft in einer Richtung mit einer in den beiden Richtungen begrenzten Winkelverschiebung in einem Träger (1) am Unterteil des Querverschiebungssystems (C) des Wechselgetriebes verschwenkt wird, mit zugeordneter Befestigung der Anlenkungswelle (2) des Spannarms (D) auf dem besagte Kettenführungsspannarm oder an der Wange (Da) dieses Arms, während der Niederträger (1) für die Befestigung auf dem Querverschiebungssystem (C) des Wechselgetriebes eingerichtet ist und ein zylindrisches Gehäuse (1b-1c) zur Aufnahme der besagten Welle aufweist, wobei dieses Gehäuse nach der Seite des Spannarms geöffnet und nach aussen geschlossen ist, und ein elastisches Mittel (5) zur Rückführung in gespanntem Zustand des Spannarms so montiert wird, dass dieses Mittel einerseits mit der Welle und andererseits mit dem besagten Träger in Verbindung steht, dadurch gekennzeichnet, dass eine Stange (4) oder ein ähnliches Mittel senkrecht zur Achse des zylindrischen Gehäuses (1b) und nach einer Schnittlinie auf dem Umfangteil des besagten Gehäuses in dem Niederträger (1) montiert wird, um die Doppelfunktion des Aufhaltens der Welle (2) im bezug zum Träger (1) und eines Endanschlags für die Drehbewegung des der Welle (2) zugeordneten Spannarms (D) in bezug zum Träger (1) zu erfüllen, wobei diese Doppelfunktion durch eine entsprechende Einrichtung einer in der Ebene der Stange (4) und entgegengesetzt derselben befindlichen Anlagefläche (2d) der Welle ermöglicht wird.

2. Vorrichtung nach Anspruch 1, dadurch gekennzeichnet, dass das auf dem Spannarm oder auf der Wange des Spannarms befestigte Ende der Anlenkungswelle am wenigstens eine Abflachung aufweist, und greift in einer entsprechenden Bohrung des Arms oder der Wange, um durch beliebige bekannte Mittel zusammengefügt zu werden.

3. Vorrichtung nach Anspruch 1, dadurch gekennzeichnet, dass ein Dichtungsmittel wie beispielsweise eine Lippendichtung (3) auf dem geöffnete Ende des Gehäuses (1b) des Trägers (1) montiert ist, wobei die Lippe der Dichtung reibungswirkend gegen den Spannarm liegt.

4. Vorrichtung nach Anspruch 1, dadurch gekennzeichnet, dass die Winkel der Anlageflächen (2b-2c) der Welle (2) nach der Seite des Eingreifens des Trägers (1) auf die genannten Anlageflächen durch Abschrägungen abgekantet sind.

5. Vorrichtung nach Anspruch 1, dadurch gekennzeichnet, dass die Stange (4) oder ähnliches Mittel in tangentialer oder nahezu tangentialer Durchschneidung zum Umfangteil des Gehäuses (1b) des Trägers (1) und in der Nähe des geöffneten Endes des besagten Gehäuses zwischen dem genannten geöffneten Ende und der Anlagefläche von grösserem Durchmesser (2b) der Welle (2) montiert ist.

6. Vorrichtung nach Anspruch 1, dadurch gekennzeichnet, dass die Anlagefläche (2d) der Welle (2) eine kreisförmige Rille (2d1) aufweist, in welcher die besagte Stange sekantenmässig positioniert wird, während die besagte Anlagefläche (2d) so eingerichtet ist, dass ein Teil des Mittels (5) die Rille (2d1) hindurch durchsetzt, um in Anschlagstellung mit der Stange (4) zusammenzuwirken, die dabei als ein Endanschlag in den beiden Richtungen der Winkelverschiebung des Arms und der Welle (2) dient.

7. Vorrichtung nach Anspruch 1, dadurch gekennzeichnet, dass die Anlagefläche (2d) der Welle (2) weitgehend eingekerbt ist und Abflachungen (2d'-2d") aufweist, die die nach geeigneten Winkeln entsprechend der Ausdehnung der Winkelverschiebung gebildet sind, die in den beiden Richtungen für den Spannarm (D) und die Welle (2) vorzusehen und zu ermöglichen ist.

8. Vorrichtung nach Anspruch 1, dadurch gekennzeichnet, dass das in einer Verschwenkungsrichtung des Spannarms (D) wirksame elastische Element eine in dem Gehäuse (1b) des Trägers um eine Anlagefläche (2e) der Welle montierte Torsionsfeder (5) ist, und dass ein gekröpfter Steg (5a) an dem einen Ende der Feder in einem am Boden des besagten Gehäuses (1b) gebohrten Loch eingreift, wobei der andere gekröpfte Steg (5b) an dem anderen Ende der Feder in einem in den Anlageflächen (2b-2d) der Welle (2) gebohrten Loch eingreift, und eine elastische Vorspannung bei dem Montieren und vor der Einrichtung der Stange (4) der Feder (5) verleiht wird.

9. Vorrichtung nach Anspruch 1, dadurch gekennzeichnet, dass das in einer Verschwenkungsrichtung des Spannarms (D) wirksame elastische Element eine in dem Gehäuse (1b) des Trägers um eine Anlagefläche (2e) der Welle montierte Torsionsfeder (5) ist, und dass die Anlagefläche (2d) der Welle (2) entsprechend ihren Erzeugenden durch und durch bei Bildung zweier gleichachsigen Löcher (2d2) und (2d3) durchgebohrt ist, die für das Eingreifen und die Positionierung des Stegs (5b) der Feder in der Rille münden, wobei der andere Steg (5a) in einem anderen, im Boden des Gehäuses (1b) des Trägers gebohrten Loch eingreift, und eine elastische Vorspannung bei dem Montieren und vor der Wiedereinrichtung der Stange (4) der Feder (5) verleiht wird.

10. Vorrichtung nach einem der Ansprüche 8 oder 9, dadurch gekennzeichnet, dass das in den Anlageflächen (2b-2d) der Welle und das Loch (2d3) zum Eingreifen des Stegs (5b) der Feder (5) auf der nach der Stange (4) zeigenden Seite der Anlagefläche (2d) nicht münden, damit eine bessere Dichtigkeit sichergestellt wird.

FIG.1

FIG.2

FIG.3

FIG.4

FIG.5

0 163 583

FIG. 7

1b   2d2   4
5b
2d3
1
2d
1c
2e
2d1
2
5
8 j

FIG.8

4
5b
2d2
1
2

FIG.9

4
5b
2
1

FIG.6

2e
2d1
2d
2
2d2
2d3

3